# EUROPEAN PATENT APPLICATION

(11) **EP 2 887 269 A1**
(43) Date of publication of application: **24.06.2015**
(21) Application number: 14199249.5
(22) Date of filing: 19.12.2014
(51) Int. Cl.: G06K 19/06

(54) **Optical machine readable coded labels**

(30) Priority: 20.12.2013 US 201314136641
(71) Applicant: Alfa Wassermann, Inc., West Caldwell, NJ 07006 (US)
(72) Inventor: Hoffman, Glenn, Elmwood Park, New Jersey 07407 (US); Haluska, Jeffrey Allan, Budd Lake, New Jersey 07828 (US); Spiegel, Kurt Michael, Pearl River, New York 07828 (US); Dargis, Martin J., Westwood, New Jersey 07828 (US)
(74) Representative: Moore, Michael Richard

(57) **Abstract**

Optical machine readable coded labels are provided that are backward compatible with legacy optical readers and forward compatible with improved optical readers. The labels have symbols that are readable by the legacy optical reader to decode only a first set of information, but are readable by a second type of optical reader to decode both the first set of information and a second set of information.

## Description

### BACKGROUND OF THE INVENTION

### 1. Field of the Invention

The present disclosure is related to optical machine readable coded labels. More particularly, the present disclosure is related to optical machine readable coded labels that are decoded differently by different optical readers.

### 2. Description of Related Art

Optical readers that are capable of decoding coded labels are known. These systems are often referred to as "bar code" systems and include a label that has one or more symbols that are readable by an optical reader (i.e., a scanner or imaging device). The optical reader typically includes an illumination source, an optical sensor, and a controller. The controller controls the illumination source to illuminate the symbols on the label, controls the sensor to detect the illuminated light that is reflected light from the label, and generates an electrical signal that represents the intensity or lack of intensity of the reflection. The controller then decodes the electrical signal based on a known format of the symbols, which is stored in the controller.

These systems can include labels that are linear or one-dimensional (1D) consisting of data represented by symbols in the form of parallel lines of varying the width and spacing between the lines. The labels are one-dimensional in that only the width of the lines and the spaces between the lines is taken into account, which has traditionally limited the amount of data contained in the coded label. The one-dimensional coded labels are often referred to as "bar codes" due to the bar-like shape of parallel lines.

These systems can also include two-dimensional (2D) coded labels. The labels are two-dimensional in that the data is represented by symbols where both the height and width of the symbols are measured. Thus, the amount of data that can be contained in two-dimensional coded labels is significantly greater than that stored in one-dimensional coded labels.

More recently, these systems have included three-dimensional (3D) coded labels. The labels are three-dimensional in that the data is represented by symbols where the height, width, and depth are measured. As such, three-dimensional identification systems require engraving or etching of the symbols into a substrate instead of the more common printing as in one and two dimensional coded labels. Again, the amount of data that can be contained in three-dimensional coded labels is significantly greater than that stored in one or two dimensional coded labels.

Often, it is desired to change from one system (e.g., a 1D system) to a different identification system (e.g., a 2D system) or to use codes of different data densities within the same system in order to take advantage of the increased data available. Unfortunately, these changes can be cost prohibitive due to the need to update the optical readers that are already in use.

Such is the case with systems such as those that use machine readable identification systems for reagent bottles as in commonly owned and assigned U.S. Patent Nos. 5,314,825, 5,357,095, and 5,420,408, the entire contents of which are incorporated by reference herein. For example, it has been determined by the present disclosure that there is a need to provide reagent bottles with coded labels that provide additional data storage then is currently available. However, conversion to a new coded label would also require expensive changes or retrofits to legacy chemical analyzers, which in many cases is not feasible.

Accordingly, it has been determined by the present disclosure that there is a need for labels that are can be decoded differently by the different types of optical readers.

### BRIEF SUMMARY OF THE INVENTION

Optical machine readable coded labels are provided with a plurality of symbols that are readable by a first type of optical reader to decode only a first set of information, but are also readable by a second type of optical reader to decode the first set of information and a second, additional set of information.

When marked with these labels, the same reagent bottle can be used in both legacy chemical analyzers (that have the first type of readers) and new chemical analyzers (that have the second type of reader). Advantageously, a single manufacturing process can produce reagent bottles for both legacy analyzers and new analyzers, which reduces manufacturing costs. Distributors need only stock a single type of bottle to supply reagents for both legacy analyzers and new analyzers, which reduces distribution costs. Further, legacy analyzers do not need to be upgraded or modified to use bottles labeled with the new labels.

An optical machine readable coded label is provided that has a plurality of symbols. Each symbol is positioned and configured in a bit position so as to represent only a first set of information when decoded by a first optical reader, but to represent a second set of information when decoded by a second optical reader having a higher optical clarity than the first optical reader.

In some embodiments, the symbols can include blank spaces, ellipsoid symbols, polygonal symbols, and any combinations thereof. In other embodiments, each symbol is also positioned and configured in the bit position so as to represent the first and second sets of information when decoded by the second optical reader.

An optical machine readable coded label is also provided that has a plurality bit positions, a symbol in each of the bit positions, a central reference code symbol designating a center of the bit positions, and an orientation code symbol located radially outward from the central reference code symbol to define an orientation of the label. The symbols in the bit positions represent a first set of information when decoded by a first optical reader. Further, the symbols in the bit positions represent the first set of information and a second set of information when decoded by a second optical reader having a higher optical clarity than the first optical reader.

A method of optically reading a coded label having first and second sets of information coded therein is provided. The method includes the steps of taking a first image of a plurality of symbols in the coded label at a first optical clarity; decoding only those symbols from the first image that meet a first criteria to provide the first set of information; taking a second image of the plurality of symbols in the coded label at a second optical clarity, the second optical clarity being higher that the first optical clarity; and decoding the second image to provide the second set of information.

In some embodiments, the method further includes the step of decoding the second image to provide the first set of information.

Other embodiments of optical machine readable coded labels are also provided that are backward and forward compatible.

In one such embodiment the label includes a first plurality of symbols, each symbol of the first plurality of symbols being positioned in a different first bit position so as to represent a first set of information and a second plurality of symbols, each symbol of the second plurality of symbols being positioned in a different second bit position so as to represent a second set of information. Here, at least one portion of a symbol of the second plurality of symbols physically overlapping at least one portion of a symbol of the first plurality of symbols. The second plurality of symbols have a characteristic that differs from the first plurality of symbols sufficiently so that a first optical reader can decode only the first set of information, while a second type of optical reader can decode the second set of information. The characteristic is selected from the group consisting of color, shade, and any combinations thereof.

In another such embodiment the label includes a first plurality of symbols, each symbol of the first plurality of symbols being positioned in a first bit position to represent a first set of information and a second symbol positioned in a second bit position to represent a second piece of information. The second bit position does not overlap the first bit position of any of the first plurality of symbols so that a first optical reader can decode only the first set of information, while a second type of optical reader can decode the first set of information and the second piece of information.

In some embodiments, the second symbol has a characteristic that differs from the first plurality of symbols, the characteristic being selected from the group consisting of color, shade, shape, and any combinations thereof.

A two-dimensional code is also provided that has a plurality of symbols. Each symbol is positioned and configured in a bit position so as to represent only a first set of information when decoded by a first optical reader, but to represent a second set of information when decoded by a second optical reader having a higher optical clarity than the first optical reader.

The two-dimensional code may comprise one or more of the features of the optical machine readable coded labels described above.

In another aspect of the present invention there is provided an optical reader arranged to read a two-dimensional code comprising a plurality of symbols each positioned and configured in a bit position. The optical reader is further arranged to decode a first set of information from the two-dimensional code when in a first configuration, or the first set of information and a second set of information from the two-dimensional code when in a second configuration. The optical reader may be defined as described herein below.

The above-described and other features and advantages of the present disclosure will be appreciated and understood by those skilled in the art from the following detailed description, drawings, and appended claims.

### BRIEF DESCRIPTION OF THE SEVERAL VIEWS OF THE DRAWINGS

FIG. 1A is an exemplary embodiment of a legacy or first optical reader;
FIG. 1B is an exemplary embodiment of a second or improved optical reader according to the present disclosure;
FIG. 2 is an exemplary embodiment of an optical machine readable coded label according to the present disclosure;
FIG. 3A illustrates the coded label of FIG. 2 as imaged by the first optical reader of FIG. 1A;
FIG. 3B illustrates the coded label of FIG. 2 as imaged by the second optical reader of FIG. 1B;
FIG. 4A illustrates all of the code positions available in an exemplary embodiment of a legacy optical machine readable coded label on which the label of FIG. 2 is based;
FIG. 4B illustrates the positions of each code in the legacy optical machine readable coded label of FIG. 4A;
FIG. 5A illustrates a decoding table of how the first optical reader of FIG. 1A decodes the symbols (filled circle and blank) in the legacy label of FIG. 4A;
FIG. 5B illustrates a decoding table comparing how the first optical reader of FIG. 1A and the second optical reader of FIG. 1B decode the symbols (filled circle, filled square, filled rectangle, and blank) in the label of FIG. 2;
FIG. 5C illustrates an alternate decoding table comparing how the first optical reader of FIG. 1A and the second optical reader of FIG. 1B decode various symbols (filled circle, filled square, filled triangle, blank, filled rectangle, and hollow triangle);
FIG. 6A illustrates how the image of FIG. 3A is decoded by the first optical reader of FIG. 1A;
FIG. 6B illustrates how the image of FIG. 3B is decoded by the second optical reader of FIG. 1B;
FIG. 7 is an alternate exemplary embodiment of an optical machine readable coded label according to the present disclosure;
FIG. 8A illustrates the label of FIG. 7 as imaged by the first optical reader of FIG. 1A;
FIG. 8B illustrates a portion of the label of FIG. 7 as imaged by the second optical reader of FIG. 1B, where this portion can be decoded in place of or in addition to the portion that is shown in FIG. 8A;
FIG. 9 is another exemplary embodiment of an optical machine readable coded label according to the present disclosure;
FIG. 10A illustrates the label of FIG. 9 as imaged by the first optical reader of FIG. 1A; and
FIG. 10B illustrates the label of FIG. 9 as imaged by the second optical reader of FIG. 1B.

### DETAILED DESCRIPTION OF THE INVENTION

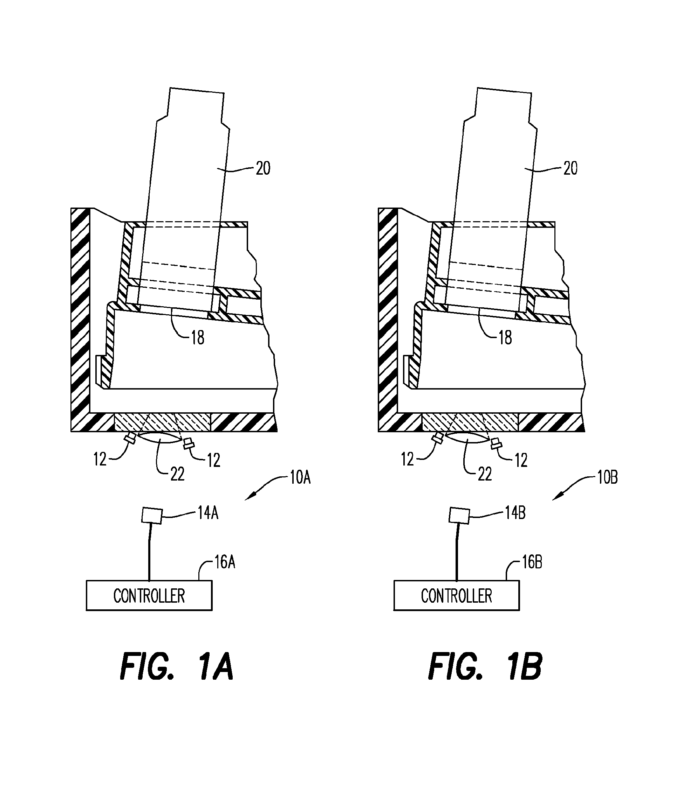

Referring to the drawings and in particular to FIGS. 1A and 1B, exemplary embodiments of optical readers according to the present disclosure are shown and are generally referred to by reference numerals 10A and 10B, respectively.

Reader 10A is described in the present application as being installed in a legacy chemical analyzer, while reader 10B is described as being installed in a modernized or improved chemical analyzer. In this example, the legacy and modernized chemical analyzers both find use with bottles of reagents 20 in a known manner.

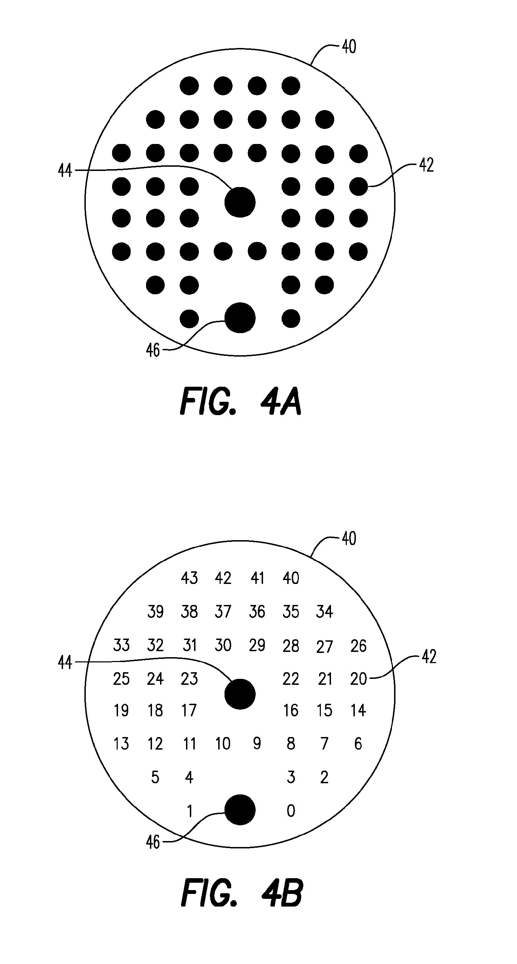

Advantageously, the present disclosure provides a machine readable coded label 18 on reagent bottle 20 that can be decoded by both the legacy reader 10A and the improved reader 10B. Label 18 is configured so that the legacy reader 10A decodes the label in a manner that provides the same information as was present in a legacy label 40, which is discussed with reference to FIGS. 4A and 4B. Moreover, label 18 is configured so that the modernized reader 10B decodes the label in a manner that provides the same information as was present in the legacy label 40, as well as a second set of updated or modernized information.

In this manner, label 18 is backward compatible with the legacy chemical analyzers having reader 10A and forward compatible with modernized chemical analyzers having reader 10B.

It should be recognized that the techniques described herein below that are used to make label 18 backward and forward compatible with readers 10A, 10B find uses other than labeling of reagent bottles in chemical analyzers. Such other uses are contemplated to be within the scope of the present application.

Returning now to FIGS. 1A and 1B, readers 10A, 10B each include an illumination source 12, a legacy or first type of optical sensor 14A (FIG. 1A) or an improved or second type of optical sensor 14B (FIG. 1B), and a legacy or first controller 16A (FIG. 1A) or a legacy or second controller 16B (FIG. 1B).

In the illustrated embodiment, reagent bottle 20 is held so that label 18 is in a predetermined location above the optical sensor 14A, 14B. The information encoded in label 18 is read by optical sensor 14A, 14B in response to reflected light provided by light source 12 directed toward the bottom surface of a reagent bottle 20. Optical sensor 14A, 14B, which can be a camera or other image sensor can include a lens system 22 as needed to focus light from the bottom of reagent bottle 20 onto the optical sensor. In this manner, controller 16A, 16B controls optical sensor 14A, 14B and light source 12 to store a digitized image of label 18 on the bottom of each reagent bottle 20.

It has advantageously been determined by the present disclosure that differences in optical sensor 14A, 14B can be used to configure label 18 so as to provide the aforementioned backward and forward compatibility.

For example, reader 10A is configured so that the label 18 is readable by the first type of optical sensor 14A and controller 16A of FIG. 1A to decode a first set of information, while filtering out or not recognizing/decoding a second set of information. Conversely, reader 10B is configured so that the label 18 is readable by the second type of optical sensor 14B and controller 16B of FIG. 1B to decode both the first and second sets of information.

In this manner, reagent bottles 20 having the same label 18 thereon can be used in reader 10A or 10B that has either type of optical sensor 14A or 14B. When the reagent bottle 20 having label 18 is used in reader 10A having the first type of optical sensor 14A and controller 16A (FIG. 1A), only the first set of information is decoded. However, when the reagent bottle 20 having label 18 is used in reader 10B having the second type of optical sensor 14B and controller 16B (FIG. 1B), both the first and second sets of information are decoded.

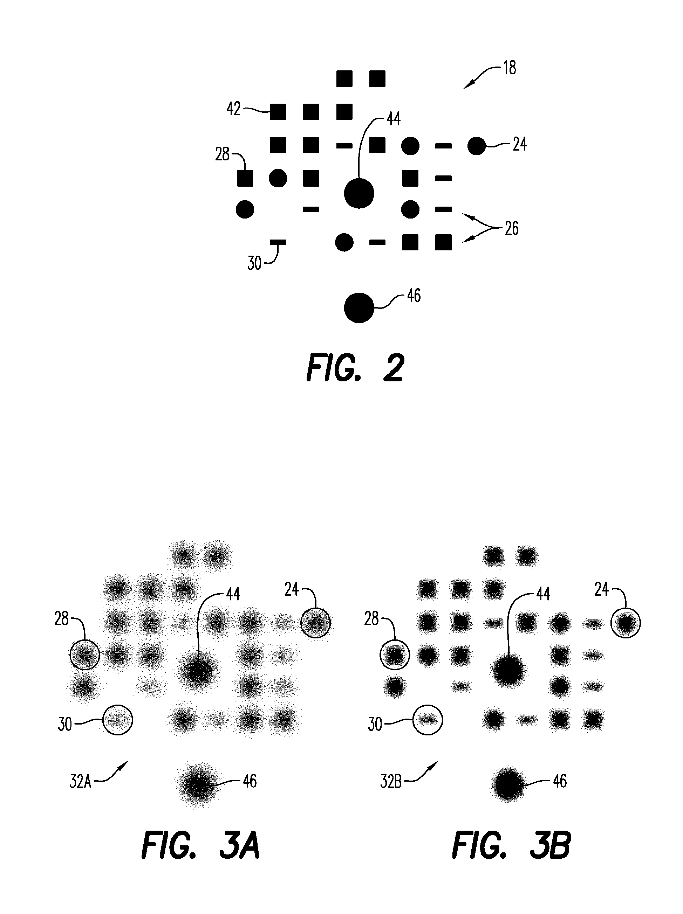

FIG. 2 illustrates an exemplary embodiment of a two-dimensional label 18 according to the present disclosure for use with the readers 10A, 10B of FIGS. 1A and 1B. Label 18 is represented, in its simplest form, as a plurality of ellipsoid and/or polygonal symbols. The ellipsoid symbols can include, but are not limited to, circles, ovals, and ellipses. The polygonal symbols can include, but are not limited to, regular and irregular polygons such as squares, rectangles, triangles, and others. The symbols can be filled symbols (e.g., solid color), unfilled symbols (e.g., outline only), and combinations thereof.

In the illustrated embodiment label includes a plurality of filled circles 24 having different diameters and a plurality of polygons 26 having different sizes. For purposes of explanation, polygons 26 are illustrated as filled squares 28 and elongated filled rectangles 30. Of course, it is contemplated by the present disclosure for reader 10B and/or label 18 to find use with any number of other polygonal shapes. Again, the squares 28 and rectangles 30 representing differing sets of information.

Label 18 of FIG. 2 is shown in FIG. 3A in the form of a first image 32A, which represents how the label is imaged by the optical sensor 14A of first reader 10A (FIG. 1A). The first type of optical sensor 14A can be, for example, a charge-coupled device (CCD), a complementary metal-oxide-semiconductor (CMOS), or any other sensor. Preferably, optical sensor 14A has a pixel array of 192 by 165 pixels.

Label 18 of FIG. 2 is also shown in FIG. 3B in the form of a second image 32B, which represents how the label is imaged by the second type of optical sensor 14B of FIG. 1B. The second type of optical sensor 14B can be, for example, a charge-coupled device (CCD), a complementary metal-oxide-semiconductor (CMOS), or any other sensor. Preferably, optical sensor 14B has a pixel array of 744 by 480 pixels.

As can be seen from comparing FIGS. 3A and 3B, the first type of optical sensor 14A has a lower optical clarity then the second type of optical sensor 14B such that the optical clarity of the label 18 as imaged by the first type of optical sensor is lower than the optical clarity of that same label as imaged by the second type of optical sensor.

As used herein, the term "optical clarity" shall mean a measure the sharpness or resolution of an image as defined by, for example, the number of pixels in the sensor array and/or the color contrast available from the sensor array (i.e., bilevel or binary images; grayscale or monochromatic images; and color images).

Referring to FIG. 3A, the first image 32A includes images of the dots 24, squares 28, and rectangles 30. As can be seen, the optical clarity is such that dots 24 and squares 28 appear substantially similar, namely are difficult to discern from the image whether the object is a dot or a square. Further, the optical clarity is such that rectangles 30 are almost invisible. Accordingly, reader 10A is configured such that controller 16A filters out or does not decode rectangles 30 and decodes both circles 24 and squares 28 as the same symbol - and hence as the same set of information, namely that of circles 24.

In contrast and referring to FIG. 3B, the second image 32B includes images of the dots 24, squares 28, and rectangles 30. As can be seen, the optical clarity is such that the dots 24, squares 28, and rectangles 30 can easily be discerned from one another. Accordingly, reader 10B is configured such that controller 16B decodes each of circles 24, squares 28, and rectangles 30 as different labels - and hence as different sets of information.

It has advantageously been determined by the present disclosure that reader 10B can be configured so that controller 16B can take advantage of this difference in optical clarity to decode the label 18 of FIG. 2 differently based on the image clarity from optical sensor 14B.

Thus, the embodiment described with reference to FIGS. 2, 3A, and 3B makes use of the differences in only one portion of the optical clarity, namely image resolution, between the optical sensor 14A or 14B.

Thus, reader 10A is configured so that controller 16A decodes the lower optical clarity image 32A of label 18 from FIG. 3A as including only a first set of information, while reader 10B is configured so that controller 16B decodes the higher optical clarity image 32B of label 18 from FIG. 3B as including both the first set of information and a second set of information. In some embodiments, reader 10B may be configured to only decode the second set of information.

Stated another way, label 18 is configured so that reader 10A, due to its lack of optical clarity present in image 32A available from the first type of sensor 14A, filters out the second set of information present in the label. Moreover, label 18 is also configured so that reader 10B, due to the higher optical clarity present in image 32A available from the second type of sensor 14B, decodes at least the second set of information, and in some instances decodes the first set of information, that are present in the same label.

Accordingly, reagent bottles 20 having the same label 18 thereon can be used in a reader 10A that has optical sensor 14A and controller 16A or in a reader 10B that has sensor 14B and controller 16B. When the reagent bottle 20 having label 18 is used in reader 10A having the first type of optical sensor 14A and controller 16A, only the first set of information is decoded. However, when the reagent bottle 20 having label 18 is used in reader 10B having the second type of optical sensor 14B and controller 16B, both the first and second sets of information are decoded.

In the embodiment of label 18 illustrated in FIG. 2, the same symbol (i.e., polygons 26) of the label is decoded differently depending on whether the symbol is imaged by the first or second type of sensors 14A, 14B.

The design and operation of label 18 of FIG. 2 is described in more detail with simultaneous reference to FIGS. 4A through 6B.

FIG. 4A is a view of an exemplary embodiment of a legacy or prior art optical machine readable label 40 as described in U.S. Patent Nos. 5,314,825, 5,357,095, and 5,420,408 on which the label of FIG. 2 is based.

Legacy label 40 has a background on which a contrasting pattern of bit code symbols 42 are defined. The pattern shown in FIGS. 4A and 4B includes every possible position for the bit code symbols in the label 40. The encoding pattern in this example uses a unique arrangement of filled circles and blank areas in the various positions where all of the positions are illustrated in FIG. 4A as having a filled circle with the pattern being dependent on the data to be encoded.

In the illustrated embodiment, label 40 is circular such that the radial position of the label must be determined before the label can be decoded. Thus, in this example, label 40 also includes a spaced pair of large position reference code symbols 44, 46 which define and orient the bit code symbol area. One position reference code symbol 44 is in a central position, designating the approximate center of the label. The other position reference code symbol 46 is an orientation code which is located radially outward from central position code symbol 44 to define an orientation of the label.

Label 40 is divided into a plurality of bit code symbols 42, whose positions are defined by the reference code symbols 44, 46. In embodiments, where the radial position of label 40 is known, the label can eliminate the reference code symbols 44, 46.

Each bit code symbol 42 maps to a single bit of the multi-bit binary identification code. The binary value of each bit of the multi-bit binary code is determined by whether bit code symbol 42 is present or absent in the mapped bit field.

In the illustrated embodiment, the spacing between the imprinted pair of reference code symbols 44, 46 is substantially greater than the spacing between adjacent bit code symbols 42 about the label area and also being greater than the spacing between each of the imprinted reference code symbols 44, 46 and the bit code symbols 42 adjacent to it.

FIG. 4B is a view showing the correspondence between bit position in the multi-bit binary code symbol and bit dot position within the label 40. The positions are numbered 0 through 43.

Bit code symbols 42 are smaller than reference code symbols 44, 46. In general, position reference code symbols 44, 46 have a minimum area and the bit code symbols 42 have a maximum area. The minimum area of position reference code symbols 44, 46 is greater than the maximum area of bit code symbols 42 so that position reference code symbols 44, 46 can be easily distinguished from bit code symbols 42.

Simple thresholding is used within each bit field to detect whether a bit code symbol 42 is present of sufficient area to constitute a bit or whether no mark of sufficient area is present so as to constitute the absence of a bit.

Advantageously, label 18 illustrated above with respect to FIG. 2 includes the same bit positions of bit code symbols 42. Further, and when necessary for radial position determination, label 18 can include reference code symbols 44, 46 of the same size and positions as the legacy label 40.

However, in the case of the legacy label 40, information is encoded using only two code symbols, a filled circle and the absence of the filled circle (blank space). In the case of the label 18, information is encoded using more than two code symbols such as, but not limited to, a filled circle, a filled square, a filled rectangle, and the absence of any code (blank space).

When a filled circle is used on label 18, the size of the bit code symbol 42 printed on the label 18 is identical to the size of the bit code symbol 42 of label 40.

When a filled square is used on label 18, the square is chosen so that its area is substantially the same as the area of the filled circle of label 40. However, the improved reader 10B distinguishes the filled square from the filled circle by identifying edge pixels in the image and determining if they are approximately the same distance from the center of the image. Of course, it is contemplated by the present disclosure for reader 10B to distinguish filled squares from filled circles by any desired method.

When a filled rectangle is used on label 18, the length of the filled rectangle is approximately the same as the diameter of the filled circle of label 40. However, the height of the filled rectangle printed on label 18 is chosen so that the height multiplied by the length is less than the bit dot threshold of the reader 10A. It follows that the area the filled rectangle has the smallest area of the code symbols of label 18. Reader 10B distinguishes between the filled rectangle and the absence of a label by comparing the area of an object in the image to a rectangle threshold (a minimum area a rectangle image). Of course, it is contemplated by the present disclosure for reader 10B to distinguish between the filled rectangle and the absence of a label by any desired method.

If the area of an object appearing at a bit position in the image of the label 18 is greater than the filled rectangle threshold, but less than the filled circle threshold, controller 16B determines that the object is a filled rectangle. If controller 16B determines that the object is not a filled rectangle but its area is greater than the filled circle threshold and less than the maximum filled circle area, then the controller 16B determines that the object is either a filled circle or a filled square. If controller 16B determines that the edge pixels of the object are approximately the same distance from the center of the object, then the controller determines that the object is a filled circle, if not, the controller 16B determines that the object is a filled square.

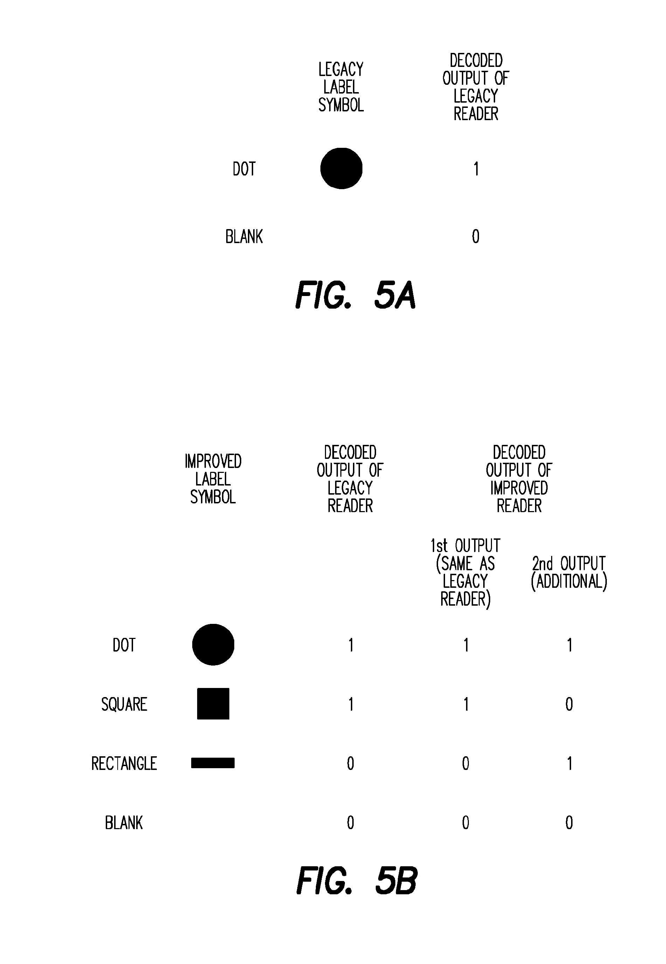

FIG. 5A is a table showing the code symbols of label 40 and the corresponding decoded output of the reader 10A, which is stored in controller 16A. FIG 5B is a table showing the code symbols of label 18 and the decoded outputs of reader 10A and reader 10B, which is stored in controller 16B.

Here, it can be seen that reader 10B produces two outputs for each improved label 18. The first output produced by reader 10B is identical to the output produced by the reader 10A when it decodes label 18 or label 40. The second output produced by reader 10B is unique to that reader's decoding of label 18.

Of course, it is contemplated by the present disclosure for label 18 to have any other code symbols (besides the filled square and filled rectangle) and still be backward compatible with the label 40 and reader 10A and forward compatible with reader 10B.

For example, it is contemplated by the present disclosure for label 18 to include a filled triangle having the same area as the filled circle of label 40. Here, reader 10A would decode the filled triangle as a filled circle, while reader 10B could distinguish the filled circle, filled square, and filled triangle from one another.

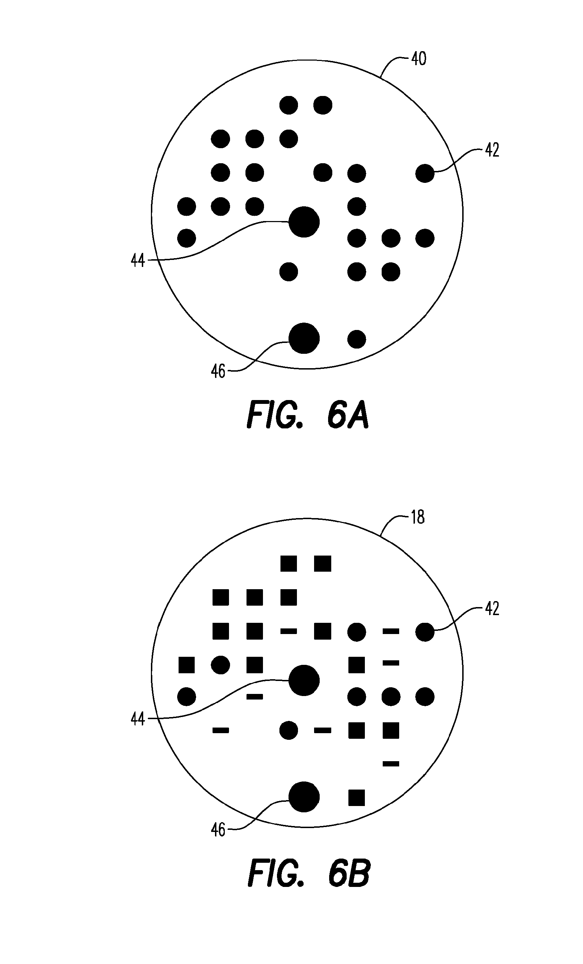

By way of example, label 40, which is shown in FIG 6A, has a first binary number encoded therein: 01101110000110110111110010011100010110000001. This label 40 can be used in reader 10A or 10B and is appropriately decoded using the decoding tables of FIGS. 5A or 5B, respectively.

This same binary number can be represented in label 18, which is shown in FIG. 6B. Advantageously, label 18 also includes a second binary number encoded therein: 00000000000001011101001010111101011000000100. This label 18 can also be used in reader 10A or 10B and is appropriately decoded using the decoding tables of FIGS. 5A or 5B, respectively.

In this example, reader 10A would only be capable of decoding the first binary number in label 18, while reader 10B would be capable of decoding the first and the second binary numbers in the label.

Also, it is contemplated by the present disclosure for label 18 to include codes having an area less than the filled circle threshold of the reader 10A such as, but not limited to a small filled square. Here, the small filled square would be decoded by reader 10A as the absence of a code, while it would be decoded by reader 10B, due to the higher resolution sensor 14B, as distinguished from the filled rectangle and the normally sized filled square.

Additionally, it is contemplated that the reduction in area of the code symbols present in label 18 can be provided using unfilled geometric shapes. As used herein, the term "area" is understood to mean that portion of the label covered by the imprinted code symbol.

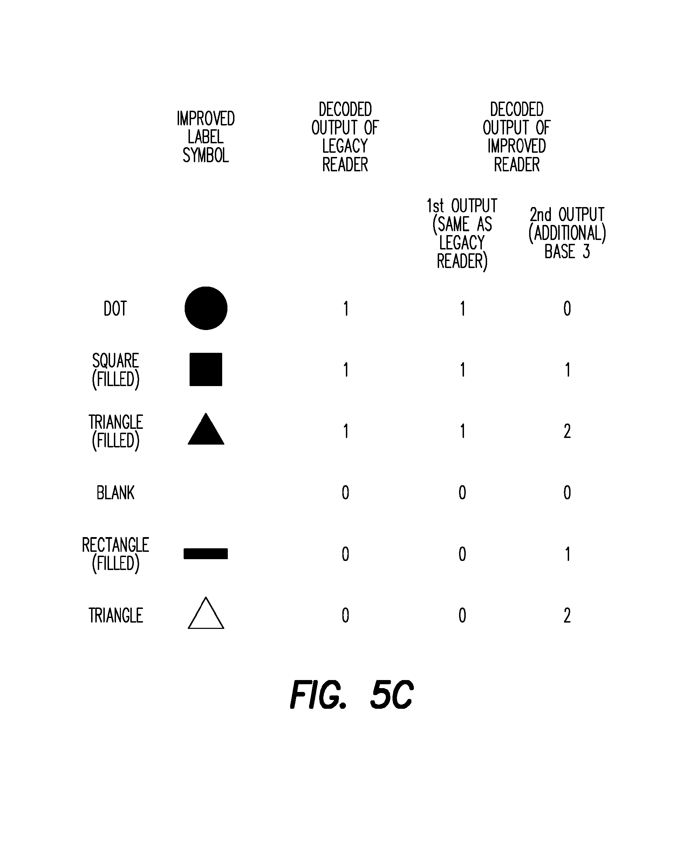

For example, label 18 is described above as having several filled geometric shaped such as, but not limited to, filled circles, filled squares, filled rectangles, and filled triangles. Of course, it is contemplated by the present disclosure for label 18 to include hollow or unfilled geometric shapes such as that shown in FIG. 5C, where label 18 is shown having both a filled triangle and an unfilled triangle.

As can be seen in FIG. 5C, the output of reader 10A for the filled triangle is one, while reader 10B again provides two outputs with the first output being identical to that of reader 10A (i.e., one) and the second output that is two.

As can also be seen in FIG. 5C, the output of reader 10A for the unfilled triangle is zero, while reader 10B again provides two outputs with the first output being identical to that of reader 10A (i.e., one) and the second output that is two.

Accordingly, label 18 of FIG. 5C includes the filled triangle code symbol having substantially the same area as the filled circle of label 40. Thus, the filled triangle of label 18 is decoded by reader 10A as a filled circle, but is decoded by the second output of reader 10B as distinguished from the filled circle and from the filled square.

Further, label 18 of FIG. 5C also includes the unfilled triangle code symbols having an area less than that of the filled circle of label 40, which is the area threshold of reader 10A. Thus, the unfilled triangle code symbol is decoded by reader 10A as the absence of a code, but is decoded by the second output of reader 10B, due to the higher optical clarity, as being distinguished from the other code symbols.

Accordingly, it is contemplated by the present disclosure for label 18 to provide the aforementioned backward and forward compatibility and achieve a higher data density by encoding information in base 2, or a base greater than base 2. For example, the embodiment shown in FIG. 5C is illustrated encoding in base 3. To achieve backward compatibility, the code symbol at each position in label 18 is one of three different code symbols depending on whether that position in label 40 is encoded as a 0 or a 1.

Thus, it is contemplated by the present disclosure for label 18 to have any combination of filled and unfilled geometric shapes and or shapes that provide larger, smaller or similarly sized areas from one another that can be distinguished by reader 10B but not by reader 10A.

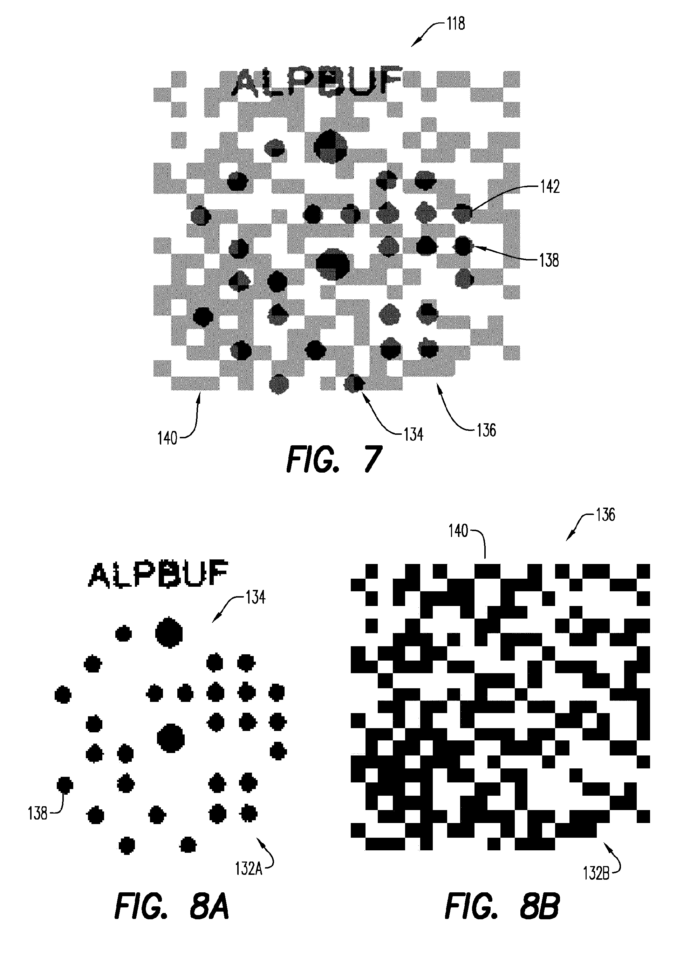

Referring now to FIG. 7, an alternate exemplary embodiment of a label 118 according to the present disclosure for use with the readers 10A, 10B of FIGS. 1A and 1B is shown. Here, label 118 again includes symbols that are decoded differently depending on whether the symbol is imaged by the first or second type of sensors 14A, 14B.

Instead of decoding the same symbol differently as in the embodiment of FIG. 2, label 118 includes two different labels that are overlaid on one another, namely a first label 134 and a second label 136.

The first label 134 includes a plurality of symbols 138 that can be decoded by the optical reader 10A having the first type of optical sensor 14A. In the illustrated embodiment, the symbols 138 are shown as a plurality of filled circles, but are contemplated by the present disclosure as being any symbol that can be decoded by the optical reader 10A. The symbols 138 represent a first set of information.

The second label 136 includes a plurality of symbols 140 that have one or more characteristics that cannot can be decoded by the optical reader 10A having the first type of optical sensor 14A, but can be decoded by the reader 10B having the second type of optical sensor 14B. The symbols 140 represent a second set of information.

Thus, the embodiment described with reference to FIGS. 7, 8A, and 8B makes use of differences in a portion of the optical clarity different than that used by the embodiment disclosed with reference to FIGS. 2, 3A, and 3B (i.e., resolution). Here, the portion of the optical clarity that is used to distinguish between the optical sensor 14A or optical sensor 14B is the selected from the group consisting of color, shade, and any combinations thereof.

In the embodiment of FIG. 7, the characteristic of second label 136 that differs from first label 134 is shade. Here, the second label 136 has a shade that is lighter than that of first label 134. It should be recognized that label 118 is illustrated using first and second labels 134 and 136 of differing shades. Of course, it is contemplated by the present disclosure for label 118 to use first and second labels 134 and 136 of differing colors, shades, and combinations thereof.

The resultant images of label 118 are shown in FIGS. 8A and 8B. Label 118 of FIG. 4 is shown in FIG. 8A in the form of a first image 132A, which represents how the label is decoded by the first reader 10A of FIG. 1A and is shown in FIG. 8B in the form of a second image 132B, which represents how the label is decoded by the second reader 10B of FIG. 1B. Again, the first optical sensor 14A has a lower optical clarity than the second optical sensor 14B such that the image of the label 118 as decoded by the first optical sensor differs from the image of the same label as decoded by the second type of optical sensor.

Referring to FIG. 8A, the first image 132A includes images of the symbols 138 of first label 134, but the images of symbols 140 of the second label 136 are difficult to discern or unperceivable due to the differing shade of these symbols. Accordingly, reader 10A is configured such that controller 16A, when in use with the first type of optical sensor 14A, filters out or does not decode symbols 140 and decodes only symbols 138 - such that only the first set of information from the symbols 138 is decoded.

In contrast and referring to FIG. 8B, the second image 132B includes images of only symbols 140. As can be seen, the increased color depth is such that symbols 138, 140 can easily be discerned from one another. Moreover and in regions of overlap 142 between the symbols 138, 140, the increased clarity is also such that symbols 138, 140 can still be discerned and separated from one another. In this manner, second image 132B can be decoded such that only the second set of information from symbols 140 is decoded as in FIG. 8B or such that both the first and second sets of information from symbols 138 and symbols 140 are decoded (not shown).

Accordingly, reader 10B is configured such that controller 16B, when in use with the second type of optical sensor 14B, can decode only the second labels 136 or can decode both the first and second labels 134 and 136 - by decoding and separating symbols 138 and 140 from one another.

Again, the configuration of label 118 is such that reader 10B can be configured so that controller 16B can take advantage of the shade and/or color difference to decode the label 118 of FIG. 7 due to the higher optical clarity provided by optical sensor 14B. In this manner, reader 10A can decode the lower clarity image 132A of label 118 from FIG. 8A as including only a first set of information, but to decode the higher clarity image 132B of label 118 from FIG. 8B as including only the second set of information or both the first set of information and a second set of information, as needed.

Stated another way, label 118 is backward compatible with reader 10A and forward compatible with reader 10B, where reader 10A uses the lack of color depth present in image 132A of label 118 available from the first type of sensor 14A to filter out the second set of information present in the label, but reader 10B uses the higher color depth present in image 132B of label 118 available from the second type of sensor 14B to filter out or separate the first and second sets of information present in the same label from one another. Accordingly, reagent bottles 20 having the same label 118 thereon can be used in reader 10A or reader 10B.

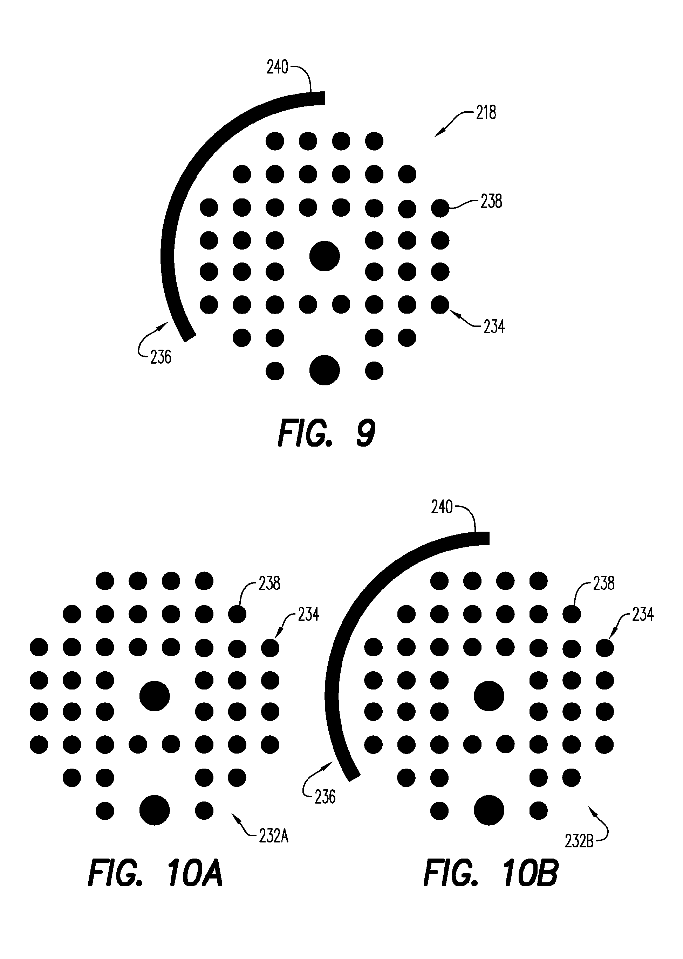

Referring now to FIG. 9, another alternate exemplary embodiment of a label 218 according to the present disclosure for use with the readers 10A and 10B of FIGS. 1A and 1B, respectively, is shown. Here, label 218 again includes symbols that are decoded differently depending on whether the symbol is imaged by the first or second type of sensors 14A, 14B.

Instead of decoding the same symbol differently as in the embodiment of FIG. 2, label 218, similar to label 118, includes two different labels, namely a first label 234 and a second label 236. Here, label 218, unlike label 118, does not have any portion that overlaps one another.

Rather, the first label 234 includes a plurality of symbols 238 that can be decoded by the optical reader 10A having the first type of optical sensor 14A. For ease of discussion, the symbols 238 represent a first set of information and are similar to symbols 138 discussed above with respect to FIG. 7 and therefore require no further description.

The second label 236 includes one or more symbols 240 (only one shown) that has one or more characteristics that cannot can be decoded by the optical reader 10A having the first type of optical sensor 14A, but can be decoded by the optical reader 10B second type of optical sensor 14B. The characteristic can be selected from the group consisting of color, shape, and any combinations thereof. Symbols 240 represent a second set of information. In the illustrated embodiment, symbol 240 has an arc shape that cannot be decoded by reader 10 having the first type of optical sensor 14A.

The resultant images of label 218 are shown in FIGS. 10A and 10B as first and second images 232A, 232B, respectively. Here, the first and second images 232A, 232B both include images of the symbols 238 of first label 234 and images of symbols 240 of the second label 236.

Reader 10A is configured so that, when in use with the first type of optical sensor 14A, controller 16A filters out or does not decode symbols 240 and decodes only symbols 238 - and hence only decodes the first set of information. Further, reader 10B is configured such that controller 16B, when in use with the second type of optical sensor 14B, decodes both the first and second labels 234 and 236 - by decoding symbols 238 and 240 and hence decodes both the first and second sets of information.

Again, the configuration of label 218 of FIG. 9 is such that readers 10A, 10B can decode the label 218 differently based on the clarity of their respective sensors 14A, 14B. In this manner, reader 10A can decode the image 232A of label 218 from FIG. 10A as including only a first set of information, but reader 10B can decode the image 232B of label 218 from FIG. 10B as including both the first set of information and a second set of information.

It is contemplated by the present disclosure for the length of the arc of symbol 240 to be decoded by controller 16 as a quantitative measurement of the bottle or container on which the bar code is placed. For example, the controller 16 can decode the arc of symbol 240 with a longer arc length as indicating a container of a larger volume, but can decode the arc of symbol 240 with a smaller arc length as indicating a container of a smaller volume.

It should also be noted that the terms "first", "second", and "third" and the like may be used herein to modify various elements. These modifiers do not imply a spatial, sequential, or hierarchical order to the modified elements unless specifically stated.

While the present disclosure has been described with reference to one or more exemplary embodiments, it will be understood by those skilled in the art that various changes may be made and equivalents may be substituted for elements thereof without departing from the scope of the present disclosure. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

Further aspects and embodiments of the invention are set out in the following numbered clauses:
1. An optical machine readable coded label comprising a plurality of symbols, each symbol of the plurality of symbols is positioned and configured in a bit position so as to represent only a first set of information when decoded by a first optical reader, but to represent a second set of information when decoded by a second optical reader having a higher optical clarity than the first optical reader.
2. The optical machine readable coded label of clause 1, wherein each symbol of the plurality of symbols is positioned and configured in the bit position so as to represent the first and second sets of information when decoded by the second optical reader.
3. The optical machine readable coded label of clause 1, wherein the plurality of symbols comprise symbols selected from the group consisting of blank spaces, ellipsoid symbols, polygonal symbols, and any combinations thereof.
4. The optical machine readable coded label of clause 3, wherein the plurality of symbols consist of symbols selected from the group consisting of filled symbols, unfilled symbols, and any combinations thereof.
5. The optical machine readable coded label of clause 1, further comprising at least two position reference code symbols.
6. The optical machine readable coded label of clause 1, wherein the first set of information is a first binary number and the second set of information is a second binary number.
7. An optical machine readable coded label, comprising:
   a plurality bit positions;
   a symbol in each of the bit positions so as to represent a first set of information when decoded by a first optical reader and represent the first set of information and a second set of information when decoded by a second optical reader having a higher optical clarity than the first optical reader;
   a central reference code symbol designating a center of the plurality of bit positions; and
   an orientation code symbol located radially outward from the central reference code symbol to define an orientation of the label.
8. The optical machine readable coded label of clause 7, wherein the symbol at each of the plurality of bit positions is selected from the group consisting of a blank space, an ellipsoid symbol, and a polygonal symbol.
9. The optical machine readable coded label of clause 8, wherein the symbol at each of the plurality of bit positions is selected from the group consisting of a filled polygon, a filled ellipsoid, an unfilled polygon, and an unfilled ellipsoid.
10. The optical machine readable coded label of clause 7, wherein the first set of information is a first binary number and the second set of information is a second binary number.
11. A method of optically reading a coded label having first and second sets of information coded therein, comprising:
   taking a first image of a plurality of symbols in the coded label at a first optical clarity;
   decoding only those symbols from the first image that meet a first criteria to provide the first set of information;
   taking a second image of the plurality of symbols in the coded label at a second optical clarity, the second optical clarity being higher that the first optical clarity;
   decoding the second image to provide the second set of information.
12. The method of clause 11, further comprising decoding the second image to provide the first set of information.
13. An optical machine readable coded label comprising:
   a first plurality of symbols, each symbol of the first plurality of symbols being positioned in a different first bit position so as to represent a first set of information; and
   a second plurality of symbols, each symbol of the second plurality of symbols being positioned in a different second bit position so as to represent a second set of information,
   at least one portion of a symbol of the second plurality of symbols physically overlapping at least one portion of a symbol of the first plurality of symbols,
   the second plurality of symbols having a characteristic that differs from the first plurality of symbols sufficiently so that a first optical reader can decode only the first set of information, while a second type of optical reader can decode the second set of information, the characteristic being selected from the group consisting of color, shade, and any combinations thereof.
14. An optical machine readable coded label comprising:
   a first plurality of symbols, each symbol of the first plurality of symbols being positioned in a first bit position to represent a first set of information,
   a second symbol positioned in a second bit position to represent a second piece of information, the second bit position not overlapping the first bit position of any of the first plurality of symbols so that a first optical reader can decode only the first set of information, while a second type of optical reader can decode the first set of information and the second piece of information.
15. The optical machine readable coded label of clause 14, wherein the second symbol has a characteristic that differs from the first plurality of symbols, the characteristic being selected from the group consisting of color, shade, shape, and any combinations thereof.

## Claims

1. An optical machine readable coded label comprising a plurality of symbols, each symbol of the plurality of symbols is positioned and configured in a bit position so as to represent only a first set of information when decoded by a first optical reader, but to represent a second set of information when decoded by a second optical reader having a higher optical clarity than the first optical reader.

2. The optical machine readable coded label of claim 1, wherein each symbol of the plurality of symbols is positioned and configured in the bit position so as to represent the first and second sets of information when decoded by the second optical reader.

3. The optical machine readable coded label of any of claims 1 or 2, wherein the plurality of symbols comprise symbols selected from a group consisting of: blank spaces; ellipsoid symbols; polygonal symbols; and any combinations thereof.

4. The optical machine readable coded label of any preceding claim, wherein the plurality of symbols consist of symbols selected from a group consisting of:
filled symbols; unfilled symbols; and any combinations thereof.

5. The optical machine readable coded label of any preceding claim, further comprising at least two position reference code symbols.

6. The optical machine readable coded label of claim 5, wherein the at least two position reference code symbols comprise:
a central reference code symbol designating a center of the plurality of bit positions; and
an orientation code symbol located radially outward from the central reference code symbol to define an orientation of the label.

7. The optical machine readable coded label of any preceding claim,
wherein the first set of information is a first binary number and the second set of information is a second binary number.

8. The optical machine readable coded label of any preceding claim,
wherein the plurality of symbols comprises a first plurality of symbols and a second plurality of symbols, wherein at least one portion of a symbol of the second plurality of symbols physically overlaps at least one portion of a symbol of the first plurality of symbols.

9. The optical machine readable coded label of claim 8, wherein the second plurality of symbols comprise a characteristic that differs from the first plurality of symbols sufficiently so that the first optical reader can decode only the first set of information, while the second type of optical reader can decode the second set of information, wherein the characteristic is selected from a group consisting of: color, shade, shape, and any combinations thereof.

10. The optical machine readable coded label of any of claims 1 to 7, wherein the plurality of symbols comprises a first plurality of symbols and a second symbol positioned in a second bit position to represent a second piece of information, the second bit position not overlapping the first bit position of any of the first plurality of symbols so that a first optical reader can decode only the first set of information, while a second type of optical reader can decode the first set of information and the second piece of information.

11. A two-dimensional code comprising a plurality of symbols, each symbol of the plurality of symbols is positioned and configured in a bit position so as to represent only a first set of information when decoded by a first optical reader, but to represent a second set of information when decoded by a second optical reader having a higher optical clarity than the first optical reader.

12. The two-dimensional code of claim 11, wherein each symbol of the plurality of symbols is positioned and configured in the bit position so as to represent the first and second sets of information when decoded by the second optical reader.

13. The two-dimensional code of claim 11 or 12, which is further defined in accordance with any of claims 3 to 10.

14. A method of optically reading a coded label having first and second sets of information coded therein, comprising:
taking a first image of a plurality of symbols in the coded label at a first optical clarity;
decoding only those symbols from the first image that meet a first criteria to provide the first set of information;
taking a second image of the plurality of symbols in the coded label at a second optical clarity, the second optical clarity being higher that the first optical clarity;
decoding the second image to provide the second set of information.

15. The method of claim 14, further comprising decoding the second image to provide the first set of information.
